(19) **Europäisches Patentamt**

**European Patent Office**

**Office européen des brevets**

(11) **EP 0 840 473 B1**

(12) **FASCICULE DE BREVET EUROPEEN**

(45) Date de publication et mention
de la délivrance du brevet:
**01.06.2005 Bulletin 2005/22**

(51) Int Cl.⁷: **H04J 14/02**, H04B 10/18

(21) Numéro de dépôt: **97402537.1**

(22) Date de dépôt: **27.10.1997**

(54) **Dispositif d'adaptation pour réseau de communication optique**

Anpassungsvorrichtung für optisches Kommunikationsnetzwerk

Adaptation device for optical communication network

| | |
|---|---|
| (84) Etats contractants désignés:<br>**AT BE CH DE ES FR GB IT LI NL SE** | (72) Inventeur: **Chbat, Michel**<br>**75014 Paris (FR)** |
| (30) Priorité: **31.10.1996 FR 9613322** | (74) Mandataire: **Fournier, Michel Robert Marie et al**<br>**COMPAGNIE FINANCIERE ALCATEL**<br>**Département Propriété Industrielle**<br>**54, rue La Boétie**<br>**75008 Paris (FR)** |
| (43) Date de publication de la demande:<br>**06.05.1998 Bulletin 1998/19** | |
| (73) Titulaire: **ALCATEL**<br>**75008 Paris (FR)** | (56) Documents cités:<br>**EP-A- 0 539 177**    **EP-A- 0 654 917**<br>**US-A- 5 224 183** |

Printed by Jouve, 75001 PARIS (FR)

**Description**

L'invention se situe dans le domaine des réseaux de communication optique utilisant le multiplexage en longueur d'onde.

Ces réseaux sont constitués d'une pluralité de noeuds reliés entre eux par des liaisons optiques. Chaque noeud comporte des entrées "utilisateur" et est relié à un ou plusieurs autres noeuds au moyen de lignes optiques correspondantes.

La transmission d'un message utilisateur depuis un noeud émetteur jusqu'à un noeud destinataire s'effectue par une liaison optique comprenant des lignes et éventuellement des noeuds intermédiaires, selon un itinéraire qui est généralement fonction de la longueur d'onde portant ce message. Cette fonction de routage spectral est pilotée par un gestionnaire de réseau qui attribue, au niveau de chaque noeud émetteur et en fonction des noeuds destinataires, les longueurs d'onde portant les messages.

La performance d'un tel réseau, notamment en termes de qualité de signal et de débit, est cependant limitée par les propriétés optiques des liaisons qui sont le siège de phénomènes physiques ayant pour effet de dégrader les signaux optiques. Ces phénomènes sont notamment la dispersion chromatique et la non-linéarité dans les fibres constituant les lignes, ainsi que l'atténuation de la puissance optique dans les fibres et dans certains composants tels que coupleurs, commutateurs, multiplexeurs, démultiplexeurs, convertisseurs de longueur d'onde utilisés dans les noeuds et tout au long des lignes.

On connaît cependant des moyens pour remédier au moins partiellement aux dégradations que ces phénomènes entraînent. Ainsi, l'atténuation dans les fibres peut être compensée au moyen d'amplificateurs disposés en amont ou en aval ou tout au long des liaisons. Une autre technique connue, appelée "inversion spectrale" ou "conjugaison de phase" peut être avantageusement utilisée pour corriger les effets de la dispersion chromatique ainsi que les non-linéarités dues à l'effet Kerr (dépendance linéaire des variations de l'indice d'un milieu à l'égard des variations d'intensité lumineuse) . Le principe de compensation utilisant l'inversion spectrale est décrit dans l'article : "Compensation for channel dispersion by nonlinear optical phase conjugation", Amnon Yariv et al., OPTICS LETTERS, Vol. 4, N° 2, février 1979. Les conditions à satisfaire pour que l'invention spectrale corrige à la fois la dispersion chromatique et les non-linéarités ont été exposées par S. Watanabe à l'occasion de la conférence IOOC 95 qui s'est tenue du 26 au 30 juin 1995 à Hong-Kong.

Pour des raisons de simplicité, on cherche généralement à améliorer la performance d'un réseau en réalisant une compensation ou une précompensation des phénomènes précités aux extrémités des lignes. Ce type de correction, appelé "compensation point à point", suppose cependant que les extrémités des fibres sont accessibles de façon à pouvoir intercaler des dispositifs de compensation entre ces extrémités et les noeuds. Or, de telles modifications sont coûteuses et ne sont pas toujours possibles dans les réseaux déjà installés, surtout dans le cas où il s'agit de réseaux de grande dimension. Les documents US-A-5 224 183 (DUGAN JOHN M) 29 juin 1993 et EP-A-0 539 177 (NIPPON ELECTRIC CO) 28 avril 1993 décrivent des systèmes de "compensation point à point" pour des réseaux de communication optique.

L'invention a pour but de remédier à cet inconvénient. Dans ce but, l'invention a pour objet un dispositif d'adaptation pour réseau de communication optique comportant une pluralité de noeuds reliés entre eux par des liaisons optiques, lesdits noeuds étant aptes à transférer sélectivement des composantes spectrales de multiplex de longueurs d'onde, lesdits transferts pouvant s'effectuer respectivement à partir d'au moins une entrée d'au moins un noeud émetteur vers des noeuds destinataires par l'intermédiaire desdites liaisons du réseau et selon des itinéraires prédéfinis, ledit dispositif d'adaptation étant caractérisé en ce qu'il comporte des moyens aptes à appliquer sélectivement des transformations aux composantes spectrales d'un multiplex d'entrée pour créer respectivement des composantes spectrales précompensées, lesdites transformations étant prévues pour précompenser les déformations de signal causées respectivement lors des transmissions le long des itinéraires prédéfinis possibles entre un noeud émetteur et lesdits noeuds destinataires, lesdites composantes spectrales précompensées étant destinées à être appliquées en entrée dudit noeud émetteur.

Selon un premier aspect de réalisation, le dispositif d'adaptation est en outre caractérisé en ce qu'il comporte :

- des modules de précompensation associés respectivement auxdites transformations, chaque module contribuant à la précompensation des dispersions chromatiques et/ou des effets non-linéaires dus aux liaisons optiques matérialisant un desdits itinéraires prédéfinis possibles, et
- des moyens d'aiguillage pour coupler sélectivement chaque composante spectrale du multiplex d'entrée à un desdits modules.

Selon un cas particulier de réalisation visant à corriger essentiellement la dispersion chromatique, le dispositif est caractérisé en ce que chaque module de précompensation comprend une fibre dispersive ayant une première extrémité couplée auxdits moyens d'aiguillage et une seconde extrémité couplée à un inverseur spectral et en ce que les caractéristiques de dispersion et la longueur de ladite fibre dispersive sont fonction d'un desdits itinéraires prédéfinis possibles de façon à ce que les dispersions cumulées créées respectivement par la fibre dispersive et par les liaisons optiques matérialisant ledit itinéraire soient égales.

Selon une autre variante visant à corriger à la fois la dispersion chromatique et les non-linéarités, le dispositif est caractérisé en ce que chaque module de précompensation comprend une fibre dispersive ayant une première extrémité couplée auxdits moyens d'aiguillage par l'intermédiaire d'un amplificateur optique et une seconde extrémité couplée à un inverseur spectral et en ce que le gain dudit amplificateur et les caractéristiques de ladite fibre dispersive sont fonction d'un desdits itinéraires prédéfinis possibles de façon à ce que les dispersions et les phases non-linéaires cumulées créées respectivement par la fibre dispersive et par les liaisons optiques matérialisant ledit itinéraire soient égales.

L'invention a également pour objet un réseau de communication optique du type défini précédemment dans lequel l'un au moins des noeuds émetteurs est couplé en entrée à un dispositif d'adaptation conforme à l'invention.

D'autres aspects et avantages de l'invention apparaîtront dans la suite de la description en référence aux figures.

- La figure 1 représente schématiquement un réseau de transmission associé à un dispositif d'adaptation selon l'invention.
- La figure 2 représente un exemple de réalisation d'un dispositif d'adaptation selon l'invention.
- La figure 3 représente un mode de réalisation d'un inverseur spectral utilisable dans le dispositif d'adaptation selon l'invention.
- La figure 4 représente une variante de réalisation du dispositif d'adaptation selon l'invention.

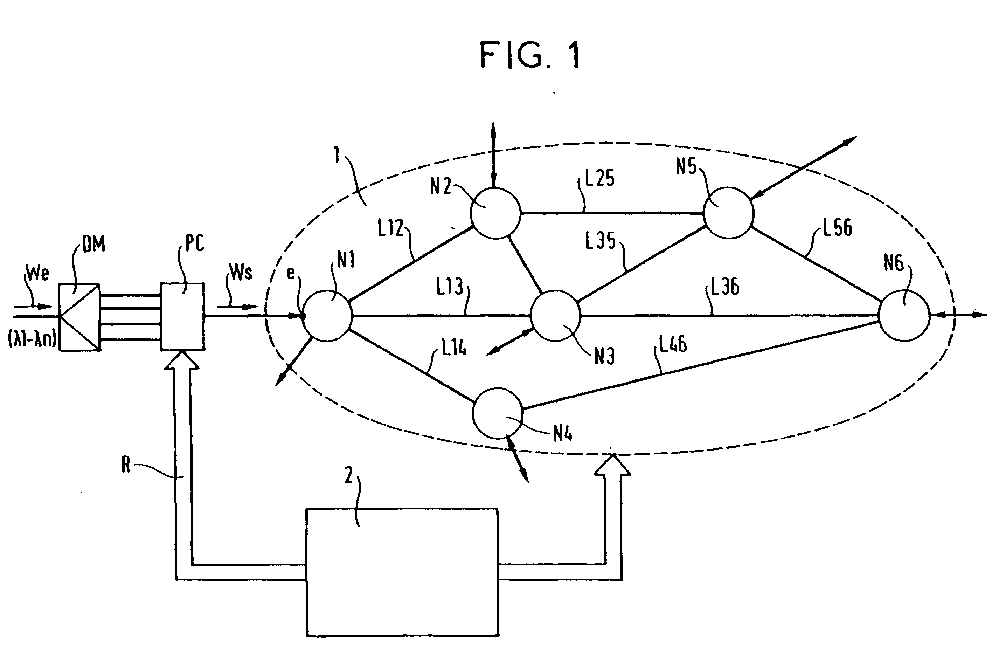

La figure 1 représente un réseau de communication optique 1 composé d'une pluralité de noeuds N1-N6. Les noeuds du réseau sont reliés entre eux directement ou non par l'intermédiaire de lignes optiques L12-L56. Les noeuds sont en outre reliés par des liaisons appropriées (symbolisées par des flèches bidirectionnelles) à des utilisateurs extérieurs au réseau. Ces utilisateurs leur délivrent des messages sous la forme d'ondes porteuses optiques modulées formant des multiplex de longueurs d'onde. Chaque noeud est normalement prévu pour transférer sélectivement les composantes spectrales des multiplex reçus d'utilisateurs ou d'autres noeuds vers les lignes du réseau auxquelles il est couplé.

Ainsi, chaque noeud, par exemple N1, possède une entrée e apte à recevoir un multiplex utilisateur destiné à être transmis par le réseau. Le noeud comporte un commutateur spectral relié à cette entrée de façon à aiguiller sélectivement les composantes spectrales du multiplex reçu vers les lignes L12, L13, L14.

Le réseau 1 est piloté par un gestionnaire de réseau 2 qui impose aux messages utilisateur d'être portés par des longueurs d'onde associées aux noeuds destinataires. Ces mêmes longueurs d'onde correspondent également à des itinéraires déterminés entre les noeuds émetteurs et les noeuds récepteurs de ces messages.

Dans un réseau normal, le multiplex utilisateur dont l'accès au réseau utilise par exemple le noeud N1 est directement appliqué à l'entrée e de ce noeud. Par contre, conformément à l'invention, le multiplex utilisateur n'est pas appliqué directement à l'entrée e du noeud N1 mais par l'intermédiaire d'un dispositif d'adaptation PC. Le multiplex utilisateur constitue donc un multiplex d'entrée We du dispositif PC, lequel fournit un multiplex précompensé Ws destiné à être appliqué à l'entrée e. Comme représenté sur la figure 1, dans le cas où le multiplex d'entrée We ne serait pas disponible sous la forme de composantes spectrales $\lambda 1$-$\lambda n$ séparées spatialement, un démultiplexeur DM devrait être disposé à l'entrée du dispositif d'adaptation PC.

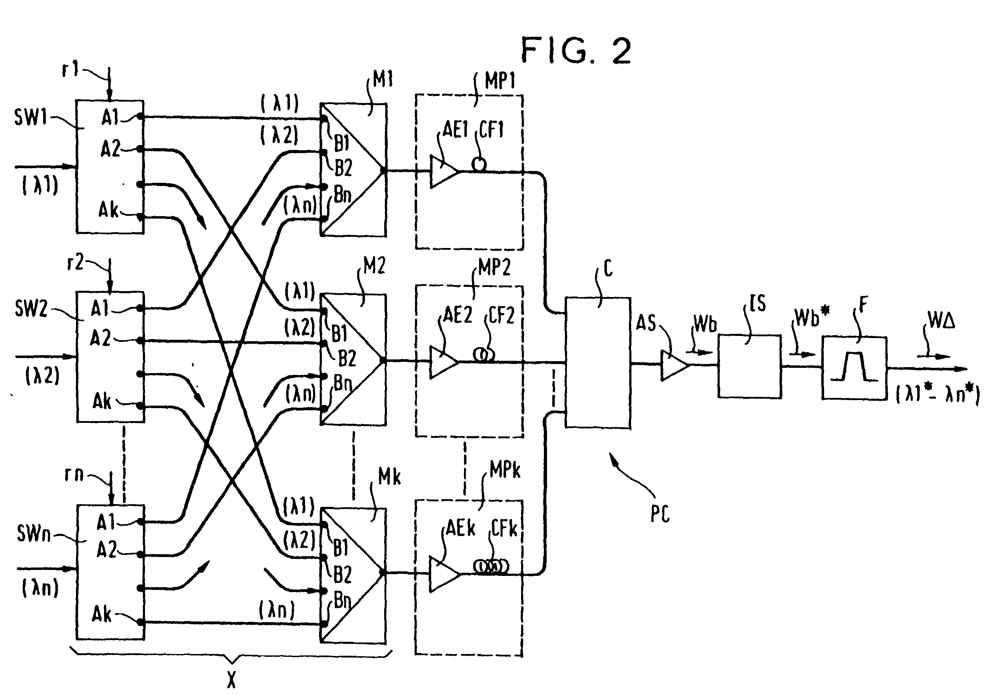

A titre d'exemple, la figure 2 montre une réalisation du dispositif d'adaptation PC qui permet de précompenser la dispersion chromatique et les effets non-linéaires dus aux liaisons optiques matérialisant les différents itinéraires possibles entre un noeud émetteur et les autres noeud du réseau.

Le dispositif comprend des moyens d'aiguillage X reliés à k modules de précompensation MP1, MP2, MPk, un coupleur C dont les entrées sont reliées aux modules MP1, MP2, MPk et dont la sortie est reliée à un inverseur spectral IS par l'intermédiaire d'un amplificateur optique As. La sortie de l'inverseur spectral est reliée à un filtre F.

Les modules de précompensation MP1, MP2, MPk correspondent respectivement à k itinéraires prédéfinis entre le noeud considéré et les autres noeuds du réseau. Un même module peut être associé à un seul itinéraire ou à plusieurs itinéraires si ceux-ci présentent les mêmes propriétés à précompenser.

Les moyens d'aiguillage X comportent n commutateurs spatiaux SW1, SW2, SWn recevant respectivement les n composantes spectrales $\lambda 1$, $\lambda 2$, $\lambda n$ issues par exemple du démultiplexeur DM représenté à la figure 1. Chaque commutateur possède un nombre k sorties A1, A2, Ak.

Les moyens d'aiguillage X comportent d'autre part k multiplexeurs M1, M2, Mk dont les sorties sont couplées respectivement aux modules de précompensation MP1, MP2, MPk. Chacun des multiplexeurs M1-Mk comporte n entrées B1, B2, Bn calées respectivement sur les longueurs d'onde $\lambda 1$, $\lambda 2$, $\lambda n$ des composantes spectrales du multiplex d'entrée We. Pour chaque multiplexeur, celle de ses entrées B1-Bn qui est calée sur une des longueurs d'onde $\lambda 1$-$\lambda n$ est couplée à une des sorties A1-Ak de celui des commutateurs spatiaux SW1-SWn prévu pour recevoir la composante spectrale ayant cette même longueur d'onde.

Dans l'exemple représenté, chaque module de précompensation MP1, MP2, MPk est essentiellement constitué d'une fibre dispersive CF1, CF2, CFk couplée à la sortie d'un multiplexeur M1, M2, Mk associé. Pour précompenser les effets non-linéaires, il conviendra que ce couplage soit réalisé par l'intermédiaire d'un amplificateur optique AE1, AE2, AEk présentant un gain ajusté et suffisamment élevé pour provoquer des effets non-linéaires convenables dans la fibre dispersive associée. L'autre extrémité de chaque fibre dispersive est directement couplée à l'entrée du coupleur C.

Dans le cas où l'on cherche seulement à précompenser la dispersion chromatique, chaque fibre dispersive aura une longueur et des caractéristiques de dispersion telles que la dispersion cumulée dans cette fibre soit égale à celle créée par les liaisons optiques du ou des itinéraire(s) associé(s) au module.

Cette condition peut aussi s'exprimer mathématiquement par la formule :

$$(1) \qquad \int D_1(z_1)dz_1 = \int D_2(z_2)dz_2 \ ,$$

où $z_1$ et $z_2$ sont les abscisses respectivement le long de la fibre dispersive et le long de la liaison associée, $D_1$ et $D_2$ sont les paramètres de dispersion respectivement aux abscisses $z_1$ et $z_2$ de la fibre dispersive et de la liaison.

Nous rappelons que le paramètre de dispersion D est lié à la constante de propagation $\beta$ par la relation :

$$d^2\beta/d\omega^2 = -(2\pi c/\omega^2)D \ ,$$

où $\omega$ est la pulsation de l'onde et c la vitesse de la lumière dans le vide.

Pour pouvoir compenser à la fois la dispersion chromatique et les phénomènes de non linéarité, il convient de choisir un gain pour l'amplificateur AE1, AE2, AEk associé à la fibre, une longueur de fibre et des caractéristiques de dispersion de cette fibre de façon à ce que la phase non-linéaire cumulée dans cette fibre soit égale à la phase non-linéaire cumulée dans la liaison optique associée.

Cette autre condition peut s'exprimer mathématiquement par la formule :

$$(2) \qquad \int \gamma(z_1)P_1(z_1)dz_1 = \int \gamma(z_2)P_2(z_2)dz_2 \ ,$$

où $\gamma_1(z_1)$ et $\gamma_2(z_2)$ sont les coefficients de non-linéarité respectivement aux abscisses $z_1$ et $z_2$ de la fibre dispersive et de la liaison, $P_1(z_1)$ et $P_2(z_2)$ étant les puissances optiques respectivement aux abscisses $z_1$ et $z_2$ de la fibre dispersive et de la liaison.

En première approximation, on peut utiliser des fibres dispersives homogènes. Dans ce cas, la formule (1) s'écrit:

$$(3) \qquad L1.d^2\beta_1/d\omega^2 = L2 \ . \ d^2\beta_2/d\omega^2 \ ,$$

où L1 et L2 sont respectivement les longueurs de la fibre dispersive et de la liaison, $\beta_1$ et $\beta_2$ étant respectivement les constantes de propagation de la fibre dispersive et de la liaison.

Toutefois, les fibres dispersives seront avantageusement constituées chacune de plusieurs segments placés bout à bout et ayant des longueurs et des caractéristiques optiques telles que les conditions (1) et (2) précédentes soient vérifiées au mieux. En variante, ces segments peuvent être couplés entre eux par l'intermédiaire d'amplificateurs.

En pratique, pour garantir un rapport signal à bruit donné, on impose le niveau de puissance par canal à l'entrée l'inverseur spectral. Pour cela, il convient de placer un amplificateur AS d'un gain approprié en amont de l'inverseur. Les gains des amplificateurs AE1, AE2, AEk sont alors imposés en fonction des puissances des composantes spectrales du multiplex d'entrée We et des pertes introduites dans les moyens d'aiguillage X.

En fonctionnement, les commutateurs spatiaux SW1, SW2, SWn reçoivent du gestionnaire de réseau 2 les commandes d'aiguillage r1, r2, rn qui sont fonction des itinéraires respectivement prévus pour les composantes spectrales $\lambda1$, $\lambda2$, $\lambda n$. Les composantes spectrales sont alors aiguillées vers les modules de précompensation puis transformées par ces modules avant de subir la conjugaison de phase par l'inverseur spectral IS commun. Les ondes Wb* issues de l'inverseur spectral sont ensuite filtrées par le filtre F de façon à ne transmettre que les longueurs d'onde $\lambda1*$-$\lambda n*$ des composantes spectrales qui sont les conjuguées des composantes spectrales d'entrée.

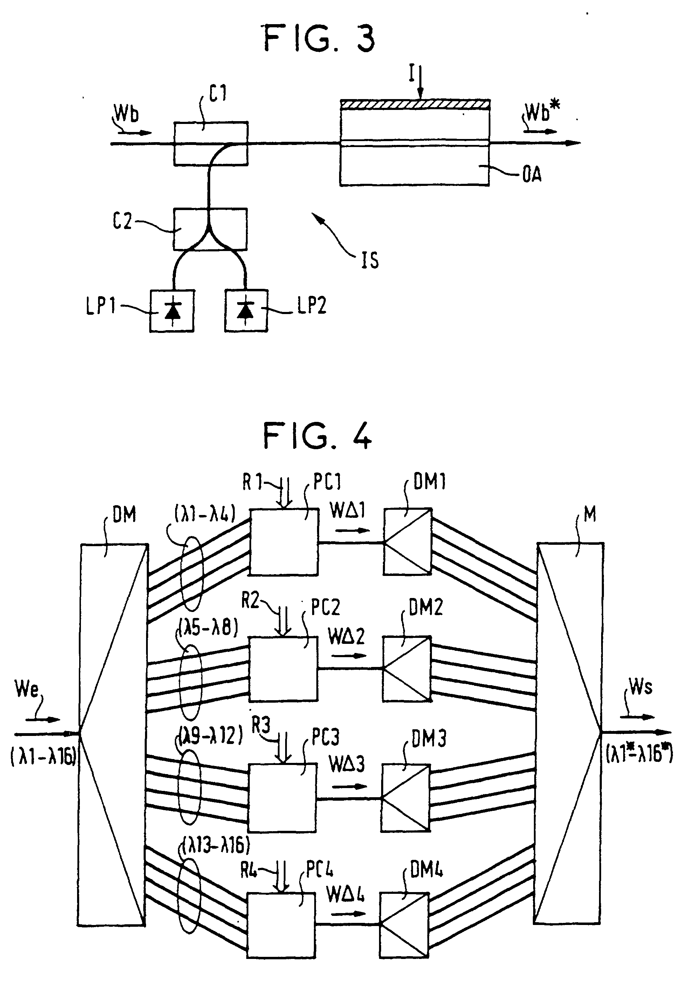

La figure 3 montre une réalisation possible de l'inverseur spectrale IS. L'inverseur IS est essentiellement constitué d'un amplificateur optique semi-conducteur OA alimenté par un courant de pompage I. Au moyen du coupleur C1 et du coupleur de polarisation C2, le milieu amplificateur de l'amplificateur OA reçoit les composantes spectrales du multiplex Wb fournies par l'amplificateur AS et deux ondes de pompe fournies par deux sources laser LP1 et LP2. Les deux sources laser LP1 et LP2 fournissent des ondes à polarisation croisées de pulsations $\omega1$ et $\omega2$. L'amplificateur OA fournit alors une onde Wb* contenant les composantes spectrales conjuguées des composantes spectrales du multiplex Wb et, pour chaque composante spectrale de pulsation $\omega s$ du multiplex Wb, l'onde Wb* contient une composante spectrale conjuguée de pulsation $\omega c$ vérifiant la relation : $\omega1 + \omega2 - \omega s = \omega c$.

Ainsi, le filtre F devra laisser passer l'ensemble des longueurs d'onde des composantes spectrales conjuguées tout en rejetant les longueurs d'onde des deux ondes de pompe et des composantes spectrales $\lambda1$-$\lambda n$ du multiplex d'entrée. Il en résulte en pratique que les longueurs d'onde des ondes de pompe doivent se trouver à l'extérieur de la bande du multiplex d'entrée.

L'inversion spectrale dans un milieu non-linéaire présente toutefois des limitations quant au nombre de composantes spectrales pouvant être inversées. Cette limitation est due à la diaphonie entre les ondes créées dans le milieu. Cette limitation peut cependant être contournée en utilisant plusieurs milieux non-linéaires selon la disposition illustrée par la figure 4. Le montage comporte une pluralité de dispositifs d'adaptation PC1-PC4 conformes chacun au schéma de la figure 2. Le multiplex d'entrée We est subdivisé par un démultiplexeur DM en plusieurs groupes de composantes spectrales λ1-λ4, λ5-λ8, λ9-λ12, λ13-λ16. Les composantes spectrales de chaque groupe sont appliquées aux entrées d'un dispositif d'adaptation PC1-PC4 associé. Les ondes de sorties Ws1-Ws4 des dispositifs d'adaptation PC1-PC4 sont alors multiplexées pour fournir le multiplex précompensé final Ws. Ceci peut être réalisé grâce à des démultiplexeurs DM1-DM4 recevant respectivement les ondes Ws1-Ws4 et dont les sorties sont couplées à un multiplexeur de sortie M. Dans ce montage, compte tenu des propriétés de filtrage des démultiplexeurs DM1-DM4 et du multiplexeur M, on peut supprimer les filtres F en sortie des dispositifs d'adaptation PC1-PC4.

L'invention n'est pas limitée aux seuls modes de réalisations précédemment décrits. En particulier, l'inversion spectrale peut être effectuée au moyen d'une fibre à dispersion décalée, de préférence choisie de façon à présenter un paramètre de dispersion D nul pour une longueur d'onde égale à la moyenne des longueur d'ondes des composantes spectrales λ1-λn du multiplex d'entrée et des composantes spectrales conjuguées λ1*-λn*.

L'invention couvre également les cas où d'autres procédé de précompensation sont utilisés. Par exemple, la dispersion chromatique peut aussi être précompensée au moyen d'une fibre de précompensation ayant un paramètre de dispersion égal et opposé à celui de la liaison associée. On peut alors utiliser un montage analogue à celui de la figure 2 où l'inverseur spectral IS est absent. De même, si l'on cherche simplement à précompenser les pertes, les modules de précompensation seront constitués de simples amplificateurs optiques dont les gains sont ajustés en fonction des pertes dans les liaisons associées.

**Revendications**

1. Dispositif d'adaptation (PC) pour réseau de communication optique (1) comportant une pluralité de noeuds (N1-N6) reliés entre eux par des liaisons optiques (L12-L56), lesdits noeuds (N1-N6) étant aptes à transférer sélectivement des composantes spectrales de multiplex de longueurs d'onde, lesdits transferts pouvant s'effectuer respectivement à partir d'au moins une entrée d'au moins un noeud émetteur (N1) vers des noeuds destinataires (N2-N6) par l'intermédiaire desdites liaisons (L12-L56) du réseau et selon des itinéraires prédéfinis, ledit dispositif d'adaptation (PC) comportant des moyens (X, MP1, MP2, MPk, IS) aptes à appliquer des transformations aux composantes spectrales (λ1-λn) d'un multiplex d'entrée (We) pour créer respectivement des composantes spectrales précompensées (λ1*-λn*), lesdites transformations étant prévues pour précompenser les déformations de signal causées respectivement lors des transmissions le long des itinéraires prédéfinis possibles entre un noeud émetteur (N1) et lesdits noeuds destinataires (N2-N6), **caractérisé en ce que** lesdits moyens (X, MP1, MP2, MPk, IS) sont aptes à appliquer à chaque composante spectrale (λ1-λn) lesdites transformations sélectivement en fonction desdits itinéraires, lesdites composantes spectrales précompensées (λ1*-λn*) étant destinées à être appliquées en entrée dudit noeud émetteur (N1).

2. Dispositif d'adaptation selon la revendication 1, **caractérisé en ce qu'**il comporte :

   - des modules de précompensation (MP1, MP2, MPk) associés respectivement auxdites transformations, chaque module contribuant à la précompensation des dispersions chromatiques et/ou des effets non-linéaires dus aux liaisons optiques (L12-L56) matérialisant un desdits itinéraires prédéfinis possibles, et
   - des moyens d'aiguillage spatiaux (X) pour coupler sélectivement chaque composante spectrale (λ1-λn) du multiplex d'entrée (We) à un desdits modules (MP1, MP2, MPk).

3. Dispositif d'adaptation selon la revendication 2, **caractérisé en ce que** chaque module de précompensation (MP1, MP2, MPk) comprend une fibre dispersive (CF1, CF2, CFk) ayant une première extrémité couplée auxdits moyens d'aiguillage (X) et une seconde extrémité couplée à un inverseur spectral (IS) et **en ce que** les caractéristiques de dispersion et la longueur de ladite fibre dispersive (CF1, CF2, CFk) sont fonction d'un desdits itinéraires prédéfinis possibles de façon à ce que les dispersions cumulées créées respectivement par la fibre dispersive et par les liaisons optiques (L12-L56) matérialisant ledit itinéraire soient égales.

4. Dispositif d'adaptation selon la revendication 2, **caractérisé en ce que** chaque module de précompensation (MP1, MP2, MPk) comprend une fibre dispersive (CF1, CF2, CFk) ayant une première extrémité couplée auxdits moyens d'aiguillage (X) par l'intermédiaire d'un amplificateur optique (AE1, AE2, AEk) et une seconde extrémité couplée à un inverseur spectral (IS) et **en ce que** le gain dudit amplificateur (AE1, AE2, AEk) et les caractéristiques de ladite fibre dispersive (CF1, CF2, CFk) sont fonction d'un desdits itinéraires prédéfinis possibles de façon à ce que les dispersions et les phases non-linéaires cumulées créées respectivement par la fibre dispersive et par les liaisons optiques (L12-L56) matérialisant ledit itinéraire soient égales.

5. Dispositif d'adaptation selon l'une des revendications 3 ou 4, **caractérisé en ce que** les secondes extrémités des fibres dispersives (CF1, CF2, CFk) de plusieurs modules (MP1, MP2, MPk) sont couplées à un inverseur spectral commun (IS).

6. Dispositif d'adaptation selon l'une des revendications 3 à 5, **caractérisé en ce que** ledit inverseur spectral (IS) comporte un amplificateur optique semi-conducteur (OA) recevant au moins une onde de pompe (LP1, LP2).

7. Dispositif d'adaptation selon l'une des revendications 2 à 6, **caractérisé en ce que** lesdits moyens d'aiguillage (X) comportent :

   - des commutateurs spatiaux (SW1-SWn) comprenant chacun un nombre de sorties égal au nombre k de modules (MP1-MPk) et au moins une entrée pour recevoir l'une des composantes spectrales (λ1-λn) du multiplex d'entrée (We),
   - k multiplexeurs (M1-Mk) comprenant chacun une sortie couplée à l'un des modules (MP1-MPk), et n entrées (B1-Bn) calées respectivement sur les longueurs d'onde desdites composantes spectrales (λ1-λn),

   et **en ce que**, pour chaque multiplexeur (M1-Mk), celle de ses entrées (B1-Bn) qui est calée sur une desdites longueurs d'onde est couplée à une des sorties de celui des commutateurs spatiaux (SW1-SWn) prévu pour recevoir la composante spectrale (λ1-λn) ayant cette même longueur d'onde .

8. Réseau de communication optique (1, PC) comportant une pluralité de noeuds (N1-N6) reliés entre eux par des liaisons optiques (L12-L56), lesdits noeuds (N1-N6) étant aptes à transférer sélectivement des composantes spectrales de multiplex de longueurs d'onde, lesdits transferts pouvant s'effectuer respectivement à partir d'au moins une entrée d'au moins un noeud émetteur (N1) vers des noeuds destinataires (N2-N6) par l'intermédiaire desdites liaisons (L12-L56) du réseau et selon des itinéraires prédéfinis, **caractérisé en ce que** le réseau de communication optique (1, PC) comporte un dispositif d'adaptation (PC) selon l'une des revendications 1 à 7.

**Patentansprüche**

1. Anpassungsvorrichtung (PC) für ein optisches Kommunikationsnetz (1), beinhaltend mehrere Knoten (N1-N6), welche untereinander über optische Verbindungen (L12-L56) verbunden sind, wobei die besagten Knoten (N1-N6) geeignet sind, spektrale Wellenlängenmultiplexkomponenten selektiv zu übertragen, wobei die besagten Übertragungen jeweils von mindestens einem Eingang mindestens eines Senderknotens (N1) zu Zielknoten (N2-N6) mittels besagter Verbindungen (L12-L56) des Netzes und auf vordefinierten Leitwegen erfolgen können, wobei die besagte Anpassungsvorrichtung (PC) **dadurch gekennzeichnet ist, daß** sie Mittel (X, MP1, MP2, MPk, IS) beinhaltet, die geeignet sind, um selektiv Transformationen auf die Spektralkomponenten (λ1-λn) eines Eingangs-Multiplexsignals (We) anzuwenden, um jeweils vorkompensierte Spektralkomponenten (λ1'-λn') zu erzeugen, wobei die besagten Transformationen dafür vorgesehen sind, die Signalverformungen vorzukompensieren, die jeweils bei Übertragungen entlang der möglichen vordefinierten Leitwege zwischen einem Senderknoten (N1) und den besagten Zielknoten (N2-N6) verursacht werden, **dadurch gekennzeichnet, daß** die besagten Mittel (X, MP1, MP2, MPk, IS) geeignet sind, auf jede Spektralkomponente (λ1-λn) die besagten Transformationen in Abhängigkeit von den besagten Leitwegen selektiv anzuwenden, wobei die besagten vorkompensierten Spektralkomponenten (λ1'-λn') dafür vorgesehen sind, dem Eingang des besagten Senderknotens (N1) zugeführt zu werden.

2. Anpassungsvorrichtung gemäß Anspruch 1, **dadurch gekennzeichnet, daß** diese folgendes beinhaltet:

   - Vorkompensationsmodule (MP1, MP2, MPk), die jeweils den besagten Transformationen zugeordnet sind, wobei jedes Modul zur Vorkompensation der chromatischen Dispersionen und/oder der Nichtlinearitätseffekte aufgrund der optischen Verbindungen (L12-L56) beiträgt, welche einen der besagten möglichen vordefinierten Leitwege bilden, und
   - räumliche Abzweigvorrichtungen (X) zur selektiven Kopplung jeder der Spektralkomponenten (λ1-λn) des Eingangs-Multiplexsignals (We) mit einem der besagten Module (MP1, MP2, MPk).

3. Anpassungsvorrichtung gemäß Anspruch 2, **dadurch gekennzeichnet, daß** jedes Vorkompensationsmodul (MP1, MP2, MPk) eine dispersive Faser (CF1, CF2, CFk) enthält, welche ein erstes Ende, das mit den besagten Abzweigvorrichtungen (X) verbunden ist, und ein mit einem Spektralinverter (IS) verbundenes zweites Ende aufweist, sowie dadurch, daß die Dispersionseigenschaften und die Länge der besagten dispersiven Faser (CF1, CF2, CFk) derart eine Funktion einer der besagten möglichen vordefinierten Leitwege sind, daß die kumulierten Dispersionen, die jeweils von der dispersiven Faser und den optischen Verbindungen (L12-L56), welche den besagten Leitweg bilden, hervorgerufen werden, gleich sind.

4. Anpassungsvorrichtung gemäß Anspruch 2, **dadurch gekennzeichnet, daß** jedes Vorkompensationsmodul (MP1, MP2, MPk) eine dispersive Faser (CF1, CF2, CFk) enthält, welche ein erstes Ende, welches mittels eines optischen Verstärkers (AE1, AE2, AEk) mit den besagten Abzweigvorrichtungen (X) verbunden ist, und ein mit einem Spektralinverter (IS) verbundenes zweites Ende aufweist, sowie dadurch, daß die Verstärkung des besagten Verstärkers (AE1, AE2, AEk) und die Eigenschaften der besagten dispersiven Faser (CF1, CF2, CFk) derart eine Funktion eines der besagten möglichen vordefinierten Leitwege sind, daß die kumulierten Dispersionen und Phasennichtlinearitäten, die jeweils von der dispersiven Faser und den optischen Verbindungen (L12-L56), welche den besagten Leitweg bilden, hervorgerufen werden, gleich sind.

5. Anpassungsvorrichtung gemäß einem der Ansprüche 3 oder 4, **dadurch gekennzeichnet, daß** die zweiten Enden der dispersiven Fasern (CF1, CF2, CFk) mehrerer Module (MP1, MP2, MPk) mit einem gemeinsamen Spektralinverter verbunden sind.

6. Anpassungsvorrichtung gemäß einem der Ansprüche 3 bis 5, **dadurch gekennzeichnet, daß** der besagte Spektralinverter (IS) einen optischen Halbleiterverstärker (OA) beinhaltet, der mindestens eine Pumpwelle (LP1, LP2) empfängt.

7. Anpassungsvorrichtung gemäß einem der Ansprüche 2 bis 6, **dadurch gekennzeichnet, daß** die besagten Abzweigvorrichtungen (X) folgendes beinhalten:

   - Raumdurchschalter (SW1-SWn), jeweils beinhaltend eine Anzahl von Ausgängen, welche gleich der Anzahl k von Modulen (MP1-MPk) ist, sowie mindestens einen Eingang zum Empfangen einer der Spektralkomponenten (λ1-λn) des Eingangs-Multiplexsignals (We),
   - k Multiplexer (M1-Mk), jeweils beinhaltend einen mit einem der Module (MP1-MPk) verbundenen Ausgang sowie n Eingänge (B1-Bn), die jeweils fest auf die Wellenlängen der besagten Spektralkomponenten (λ1-λn) eingestellt sind,

sowie dadurch, daß für jeden Multiplexer (M1-Mk) derjenige seiner Eingänge (B1-Bn), der fest auf eine der besagten Wellenlängen eingestellt ist, mit einem der Ausgänge desjenigen Raumdurchschalters (SW1-SWn) verbunden ist, der für den Empfang der Spektralkomponente (λ1-λn) vorgesehen ist, welche dieselbe Wellenlänge aufweist.

8. Optisches Kommunikationsnetz (1, PC), beinhaltend mehrere Knoten (N1-N6), welche untereinander über optische Verbindungen (L12-L56) verbunden sind, wobei die besagten Knoten (N1-N6) geeignet sind, spektrale Wellenlängenmultiplexkomponenten selektiv zu übertragen, wobei die besagten Übertragungen jeweils von mindestens einem Eingang mindestens eines Senderknotens (N1) zu Zielknoten (N2-N6) mittels besagter Verbindungen (L12-L56) des Netzes und auf vordefinierten Leitwegen erfolgen können, **dadurch gekennzeichnet, daß** das optische Kommunikationsnetz (1, PC) eine Anpassungsvorrichtung (PC) gemäß einem der Ansprüche 1 bis 7 beinhaltet.

**Claims**

1. Matching apparatus (PC) for an optical communications network (1) comprising a plurality of nodes (N1-N6) interconnected via optical links (L12-L56), said nodes (N1-N6) being suitable for selectively transferring wavelength multiplex spectrum components, it being possible for such transfers to take place from at least one inlet of at least one transmitter node (N1) to destination modes (N2-N6) via said links (L12-L56) of the network and along predefined routes, said matching apparatus (PC) comprising means (X, MP1, MP2, MPk, IS) suitable for applying transformations to the spectrum components (λ1-λn) of an input multiplex (We) so as to generate respective pre-compensated spectrum components (λ1*-λn*), said transformations being organized to pre-compensate the signal distortions caused while the signal is being conveyed along the respective possible predefined routes between a transmitter node (N1) and said destination nodes (N2-N6), said matching apparatus being **characterized in that** said means (X, MP1, MP2, MPk, IS) are suitable for selectively applying said transformations to each spectrum component (λ1-λn) as a function of said routes, said pre-compensated spectrum components (λ1*-λn*) being intended to be applied to the inlet of said transmitter node (N1).

2. Matching apparatus according to claim 1, **characterized in that** it comprises:

   pre-compensation modules (MP1, MP2, MPk) associated respectively with said transformations, each module contributing to pre-compensating the chromatic dispersions and/or the nonlinear effects due to the optical links (L12-L56) embodying one of said possible predefined routes; and

space-division directing means (X) for selectively coupling each spectrum component ($\lambda$1-$\lambda$n) of the input multiplex (We) to one of said modules (MP1, MP2, MPk).

3. Matching apparatus according to claim 2, **characterized in that** each pre-compensation module (MP1, MP2, MPk) comprises a dispersive fiber (CF1, CF2, CFk) having a first end coupled to said directing means (X) and a second end coupled to a spectrum inverter (IS), and **in that** the dispersion characteristics and the length of said dispersive fiber (CF1, CF2, CFk) are functions of one of said possible predefined routes so that the total dispersion generated by the dispersive fiber is equal to the total dispersion generated by the optical links (L12-L56) embodying said route.

4. Matching apparatus according to claim 2, **characterized in that** each pre-compensation module (MP1, MP2, MPk) comprises a dispersive fiber (CF1, CF2, CFk) having a first end coupled to said directing means (X) via an optical amplifier (AE1, AE2, AEk), and a second end coupled to a spectrum inverter (IS), and **in that** the gain of said amplifier (AE1, AE2, AEk) and the characteristics of said dispersive fiber (CF1, CF2, CFk) are functions of one of said possible predefined routes so that the total dispersion and the total nonlinear phase generated by the dispersive fiber are equal to the total dispersion and the total nonlinear phase generated by the optical links (L12-L56).

5. Matching apparatus according to claim 3 or 4, **characterized in that** the second ends of the dispersive fibers (CF1, CF2, CFk) of a plurality of modules (MP1, MP2, MPk) are coupled to a common spectrum inverter (IS).

6. Matching apparatus according to any one of claims 3 to 5, **characterized in that** said spectrum inverter (IS) includes a semiconductor optical amplifier (OA) receiving at least one pump wave (LP1, LP2).

7. Matching apparatus according to any one of claims 2 to 6, **characterized in that** said directing means (X) comprise:

space-division switches (SW1-SWn), each of which is provided with a number of outlets equal to the number $k$ of modules (MP1-MPk) and with at least one inlet for receiving one of the spectrum components ($\lambda$1-$\lambda$n) of the input multiplex (We); and

$k$ multiplexers (M1-Mk), each of which is provided with an outlet coupled to one of the modules (MP1-MPk), and with $n$ inlets (B1-Bn) set respectively to the wavelengths of said spectrum components ($\lambda$1-$\lambda$n);

and **in that**, for each multiplexer (M1-Mk), that one of its inlets (B1-Bn) which is set to a given one of said wavelengths is coupled to one of the outlets of that one of the space-division switches (SW1-SWn) which is organized to receive the spectrum component ($\lambda$1-$\lambda$n) having the same wavelength.

8. An optical communications network (1, PC) comprising a plurality of nodes (N1-N6) interconnected by optical links (L12-L56), said nodes (N1-N6) being suitable for selectively transferring wavelength multiplex spectrum components, it being possible for such transfers to take place from at least one inlet of at least one transmitter node (N1) to destination modes (N2-N6) via said links (L12-L56) of the network and along predefined routes, said network being **characterized in that** the optical communications network (1, PC) includes matching apparatus (PC) according to any one of claims 1 to 7.

# FIG. 1

EP 0 840 473 B1

# FIG. 2

EP 0 840 473 B1

# FIG. 3

# FIG. 4